# EUROPÄISCHE PATENTSCHRIFT

(11) **EP 0 316 524 B1**
(45) Veröffentlichungstag und Bekanntmachung des Hinweises auf die Patenterteilung: **21.04.1993**
(21) Anmeldenummer: 88113841.6
(22) Anmeldetag: 25.08.1988
(51) Int. Cl.: G01S 13/28, G01S 13/78, G01S 7/00

(54) **Impulsradarsystem**
Pulse radar system
Système de radar à impulsions

(30) Priorität: 18.11.1987 CH 4490/87
(43) Veröffentlichungstag der Anmeldung: 24.05.1989
(73) Patentinhaber: SIEMENS-ALBIS AKTIENGESELLSCHAFT, 8047 Zürich (CH)
(72) Erfinder: Bächtiger, Rolf, CH-8966 Oberwil-Lieli (CH); Steffen, Andreas, CH-8952 Schlieren (CH)

(56) Entgegenhaltungen:
- FR-A- 2 368 720
- US-A- 3 161 871
- US-A- 3 276 015
- US-A- 3 550 124
- US-A- 3 654 554
- US-A- 3 862 371
- US-A- 4 072 946
- NAECON '78, PROCEEDINGS OF THE IEEE 1978 NATIONAL AEROSPACE AND ELECTRONICS CONFERENCE, Dayton Convention Center, 16.-18. Mai 1978, Band 3, Seiten 1114-1118, IEEE, New York, US; M.B. RINGEL: "A high duty factor chirp radar"
- A.E.ACKER :" How to speak RADAR", Varian Associates Inc.,1988, Palo Alto, US; Seiten 16-18

## Beschreibung

Die Erfindung betrifft ein Impulsradarsystem mit einem nach dem Prinzip der Impulskompressionstechnik arbeitenden Sender und Empfänger.

Bei Radaranlagen ist zur optimalen Ausnützung der vorhandenen hochfrequenten Energie und zur Erzielung einer ausreichenden Distanzauflösung der Radaranlage meist ein Impulsexpansionsin Verbindung mit einem Impulskompressionssystem vorgesehen. Beim Einsatz von Radarsystemen dieser Art, insbesondere beim Folgeradar, ist es meist wünschenswert, den vom Radar erfaßten Objekten Daten zu übermitteln und/oder die Objekte bezüglich ihrer Identität abzufragen. Dabei stellt sich u. a. häufig die Aufgabe, den durch das Radar vermessenen Flugobjekten Lenkdaten zu übermitteln, beispielsweise um sie fernzusteuern. Zur Identifizierung von solchen Objekten ist es bekannt, Fremd-/Freunderkennungssysteme (IFF-Systeme) einzusetzen, die beispielsweise durch eine im Radarsystem integrierte zusätzliche Sendeeinrichtung die georteten Objekte bezüglich ihrer Identität prüfen.

Für Flugführungsaufgaben ist es weiterhin bekannt den eigentlichen Radarsender durch einen zweiten Sender zu ergänzen, der den identifizierten Flugobjekten Steuerdaten übermittelt. Die zusätzliche Sendeeinrichtung für Führungs- und/oder Identifizierungsaufgaben von Objekten führt dazu, daß u. a. ein aufwendiger Baustein des Systems in doppelter Ausführung vorgesehen werden muß.

Aus der französischen Offenlegungsschrift FR-A- 2 368 720 ist ferner bekannt, einen Sendepuls zu kodieren, um die entsprechenden Echosignale im Empfänger identifizieren zu können bzw. um Störsignale zu unterdrücken. Die Sendeimpulse werden zu diesem Zweck in mehrere Sektionen unterteilt, von denen zumindest eine einen Signalanteil mit um 180° gewendeter Phasenlage aufweist. Im Empfänger werden die sendeseitig um 180° gewendeten Signalanteile nochmals invertiert, wonach die Signalanteile aller Sektionen zu einem Summensignal addiert werden. Aus korrekt kodierten Echosignalen ergeben sich dabei Summensignale, die eine vorgegebene Entscheidungsschwelle jeweils überschreiten sollten. Damit die Entscheidungsschwelle genügend tief angesetzt werden kann, müssen jeweils relativ lange Sektionen gebildet werden, in denen die Phasenlage invertierbar ist. Die Sektionen werden daher lang im Verhältnis zur Gesamtlänge des Sendeimpulses gewählt, wodurch sich zwangsläufig eine starke Reduktion der Unterdrückung der Seitenzipfel (time sidelobes) ergibt.

Der Erfindung liegt daher die Aufgabe zugrunde, ein Radarsystem anzugeben, das mit geringem Aufwand und unter Ausnutzung der Freiheitsgrade der Impulskompressionstechnik zusätzlich eine Steuerung und/oder eine Identifizierung der georteten Objekte ermöglicht. Ferner soll eine gute Unterdrückung der Seitenzipfel gewährleistet sein.

Diese Aufgabe wird erfindungsgemäß dadurch gelöst, daß in den Sendeimpulsen eine einzige Impulslücke eingefügt ist, deren Dauer kurz gegenüber der Dauer des Sendeimpulses ist und die als Telemetrieübertragungskanal für im Strahlungsbereich der Antenne des Radarsender befindliche Objekte und/oder als Identifizierungssignal für am Objekt reflektierte Echoimpulse dient.

Wesentlich bei der vorliegenden Erfindung ist, daß dem eigentlichen Sendeimpuls durch eine einzige Impulslücke eine Information in kodierter Form aufgeprägt ist. Ein derart mit einer einzigen Impulslücke modulierten Radarsendeimpuls ermöglicht neben der normalen Radarfunktion eine gleichzeitige Informationsübermittlung an die im Strahlungsbereich der Antenne des Radarsenders befindlichen Objekte. Dabei kann die Informationsübermittlung sowohl für Steuerungsaufgaben, wie zum Fernlenken von Flugobjekten, als auch als Identifizierungshilfe von georteten Flugobjekten dienen. Vorteilhaft wird durch die kurze Dauer der Lücke gegenüber der Sendeimpulsdauer die normale Radarfunktion kaum beeinträchtigt.

Gemäß einer weiteren vorteilhaften Ausbildungsform der Erfindung werden die Position der Lücke bei aufeinanderfolgenden Sendeimpulsen in für Dritte nicht voraussagbarer Weise verändert. Durch Speicherung dieser einzelne Lückenposition (Kodierung) können die eintreffenden Echosignale empfangsseitig damit dahingehend überprüft werden, ob sie die entsprechende Kodierung enthalten. Ist eine Übereinstimmung nicht vorhanden, dann können diese Impulse eliminiert werden. Dadurch sind Echos unterdrückbar, die beispielsweise von Störsendern stammen. Einer scheinbar regellos veränderbaren Kodierung kann nämlich ein Störsender die Kodierungsfunktion, wenn überhaupt, dann nur verzögert entnehmen und kaum imitieren.

Im Folgenden wird ein Ausführungsbeispiel der Erfindung anhand von Zeichnungen näher erläutert.

Es zeigen
- Fig. 1: die Umhüllende eines Radarsendeimpulses mit einer Lücke nach der Erfindung,
- Fig. 2: ein Blockschaltbild eines Radarsystems mit einer Sendeeinrichtung nach der Erfindung,
- Fig. 3: ein Blockschaltbild einer Expandereinrichtung zu einer Sendeeinrichtung nach der Erfindung.
- Fig. 4: ein Oszillogramm eines Sendeimpulses, dessen Lücke einen Phasensprung aufweist.

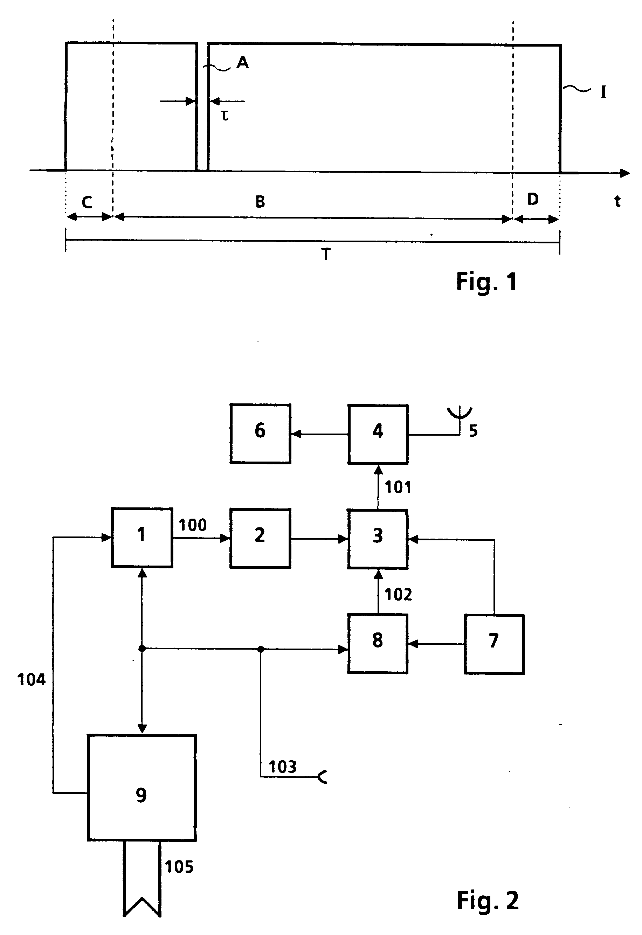

Fig. 1 zeigt einen Radarsendeimpuls I, der vorzugsweise frequenzmoduliert ist, in zeitlicher Darstellung. Innerhalb eines bestimmten Bereiches B des Sendeimpulses I, wie nachstehend näher erläutert wird, ist eine einzige Lücke A der Dauer τ eingefügt. Die Dauer τ der Lücke A ist klein gegenüber der Dauer T des Sendeimpulses I gewählt. Für die Bemessung von τ bzw. Optimierung gelten zwei Grenzwerte. Zum einen soll möglichst wenig Sendeenergie verlorengehen. Das würde zu einem Wert von τ führen, der sich dem Zeitwert Null nähert. Andererseits verursacht eine Zeitlücke von der Länge τ umso stärkere Nebenzipfel im Zeitdiagramm, je länger die Lücke A ist. Die Seitenzipfel im Zeitdiagramm sollen also ihrerseits einen bestimmten Wert nicht überschreiten. Der Optimalwert von τ liegt zwischen diesen Grenzfällen und so, daß bei der Kompression des Echoimpulses im Radarempfänger die durch die Lücke A verursachten Seitenzipfel einen vorgegebenen Wert nicht überschreiten. Auch sollte die Dauer τ der Lücke A auch nicht kürzer als etwa der reziproke Wert der Systembandbreite sein, da sonst die Bandbreite des lückenmodulierten Signales I sonst größer als die Systembandbreite würde. Vorzugsweise wird die Dauer τ der einzelnen Lücken A so gewählt, daß diese etwa 2 - 3%, insbesondere 2,5% der Sendeimpulsdauer T betragen. Innerhalb des Bereiches B des Sendeimpulses I kann die Lücke A bei jedem ausgesandten Impuls eine von mehreren möglichen Positionen einnehmen (Positionsmodulation). Auf diese Weise kann ein Datensignal dem Sendeimpuls I aufmoduliert werden, so daß die Lücke A als Telemetrieübertragungskanal für im Strahlungsbereich der Antenne des Radarsenders befindliche Objekte und/oder als Identifizierungssignal für an einem Objekt reflektierte Echoimpulse dient. Der Anfang des Bereiches B, d. h. die erste mögliche Lückenposition, sowie das Ende des Bereiches B, d. h. die letzte mögliche Lückenposition, ist vom Anfang bzw. Ende des Sendeimpulses I eine bestimmte Zeitdauer C bzw. D entfernt, die vorzugsweise etwa 6% der Gesamtimpulsdauer T beträgt. Da durch Systemunvollkommenheiten Verwaschungen des Sendeimpulsanfangs bzw. Sendeimpulsendes auftreten können, ist durch diese Maßnahme gewährleistet, daß eine eindeutige Positionsbestimmung auch der ersten sowie letzten möglichen Lückenposition im Empfänger gewährleistet ist.

Anhand eines typischen Sendeimpulses I der Dauer T = 6 µs soll eine vorteilhafte Wahl der Dauer τ sowie Positionsmöglichkeiten der Lücke A näher erläutert werden. Der Abstand C zwischen Sendeimpulsanfang und erster Positionsmöglichkeit der Lücke A beträgt dabei vorteilhaft 0,5 µs. Ebenso ist der Abstand D zwischen letzter Positionsmöglichkeit der Lücke A und Sendeimpulsende mit 0,5 µs festgelegt. Dadurch beträgt der Positionsmöglichkeitsbereich B für die Lücke A 5 µs. Die Dauer τ einer Lücke A ist dabei vorteilhafterweise mit 150 ns gewählt, so daß sich innerhalb des Bereiches B 32 verschiedene, aufeinanderfolgende Positionsmöglichkeiten für die Lücke A ergeben. Die 32 möglichen Positionen mit je 150 ns Dauer können dabei vorteilhafterweise durch ein digitales Steuersystem mit 5 bit pro Puls erzeugt werden. Bei jedem aufeinanderfolgenden Sendeimpuls I kann die Position der Lücke A im Sinne einer Modulation (Positionsmodulation) geändert werden, in dem die Lücke A mindestens eine der 32 möglichen Positionen einnehmen. Damit kann eine Datenübertragung zu den im Strahlungsbereich der Antenne des Radarsenders befindlichen Objekte erfolgen. Ist keine mit dem ausgesendeten Radarimpuls I gleichzeitig erfolgte Datenübertragung erforderlich, so bietet sich beim erfindungsgemäßen Verfahren die zusätzliche Möglichkeit eine von Puls zu Puls variable Kennzeichnung (Positionsmodulation) durchzuführen. Die Kennzeichnung kann dabei in nicht voraussagbarer Weise variieren. Da die Kennzeichnung durch eine anlageninterne Einrichtung bewerkstelligt wird, kann sie dort auch solange abgespeichert werden bis die Echosignale eingetroffen sind. Ein jedes der ankommenden Echosignale kann somit empfangsseitig überprüft werden, ob es die entsprechende Kodierung (Lückenposition) enthält. Eine Empfangseinrichtung kann dafür beispielsweise eine Auswertestellung aufweisen, die die zeitliche Position der im Echoimpuls enthaltenen Lücke A mit der Lückenposition des vorab abgestrahlten Sendeimpulses I vergleicht. Bei Nichtübereinstimmung der Lückenposition handelt es sich um einen Fremdimpuls, und der Echoimpuls wird unterdrückt. Dadurch können Impulse eliminiert werden, die nicht von den Echos, sondern beispielsweise von Störsendern stammen. Durch eine regellosveränderbare Kodierung von Impuls zu Impuls kann ein Störsender die Kodierung wenn überhaupt nur verzögert übernehmen und kaum imitieren, womit ein störsicherer Betrieb gewährleistet ist.

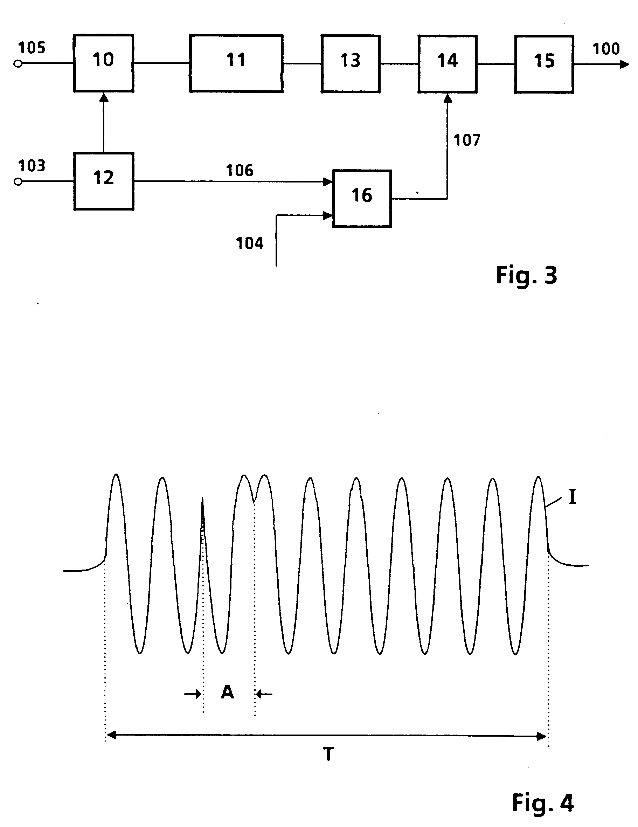

Es wäre auch denkbar, daß innerhalb der Lücke A im ausgesendeten Radarimpuls I auch ein Phasensprung zur Informationsübertragung aufmoduliert werden könnte. Der Phasensprung würde anstelle der Impulslücke treten und die Zusatzinformation in kodierter Form beinhalten. In diesem Fall ist, wie Fig. 4 zeigt, die Lücke A mit einem Signalanteil aufgefüllt, der gegenüber dem zeitlich vorausgehenden und nachfolgenden Impulsteil des Sendeimpulses I einen Phasensprung aufweist. Der Phasensprung am Anfang bzw. am Ende der Lücke A beträgt dabei vorzugsweise 180°, um einen optimalen Modulationsgrad zu erzielen. Da der Phasensprung die Lücke A vollständig ausfüllt, entspricht dessen Dauer der Dauer τ der Impulslücke, so daß die Dauer des Phasensprunges ebenfalls kurz gegenüber der Dauer T des Sendeimpulses I ist.

Fig. 2 zeigt, wie ein an sich bekanntes Radarsystem zur Erzeugung von frequenzmodulierten Sendeimpulsen, modifiziert werden kann, um Sendeimpulse nach Fig. 1 zu erzeugen und damit die Möglichkeit einer Datenmodulation zu schaffen. Das von einer Expandereinrichtung 1 stammende Ausgangssignal 100 gelangt nach erfolgter Aufwärtsmischung im Mischer 2 zu einem Sendeverstärker 3. Der verstärkte Sendeimpuls wird über die Leitung 101 einem Zirkulator 4 zugeführt und durch eine kombinierte Sende- und Empfangsantenne 5 abgestrahlt. Die von der Antenne 5 empfangenen Echoimpulse werden über den Zirkulator 4 zu einer Empfangseinrichtung weitergeleitet, wo sie in bekannter Weise verarbeitet werden. Eine Stromversorgungseinrichtung 7 ist mit dem Sendeverstärker 3 sowie mit einer Steuereinrichtung 8 verbunden, die ihrerseits über die Leitung 102 an dem Sendeverstärker 3 angeschlossen ist. Über eine Leitung 103 werden der Expandereinrichtung 1 sowie der Steuereinrichtung 8 externe Triggersignale zugeführt. Diese Schaltung ansich, ist von Radargeräten, von denen frequenzmodulierte Sendeimpulse abgestrahlt werden, bekannt. Erfindungsgemäß ist eine Kodereinrichtung 9 über eine Leitung 104 mit der Expandereinrichtung 1 verbunden und an die Triggerleitung 103 angeschlossen. In der Kodereinrichtung 9 wird in Abhängigkeit von den eingangsseitig über eine Leitung 105 in irgend einer Form z. B. parallel anliegenden Daten die Position der Lücke bestimmt, (gemäß Fig. 1) worauf die Zeitlage der Lücke in Form eines Austastimpulses über die Leitung 104 der Expandereinrichtung 1 zugeführt wird. In der Expandereinrichtung 1 wird in Abhängigkeit von den Koderdaten die Lücke zeitlagenrichtig in den Radarsendeimpuls eingefügt. Der mit der Lücke versehene Sendeimpuls wird über die Leitung 100 in bekannter Weise weiterverarbeitet.

In Fig. 3 ist ein Schaltungsbeispiel einer Expandereinrichtung 1 von Fig. 2 dargestellt. Ein an einer Leitung 105 angelegtes Zwischenfrequenzsignal gelangt über ein Eingangsgatter 10 an dem Eingang einer dispersiven Verzögerungsleitung 11. Eine Impulsformeinheit 12, die über eine Leitung 103 Triggerimpulse erhält, steuert das Eingangsgatter 10 derart, daß mehrere Schwingungen des Zwischenfrequenzsignales an den Eingang der dispersiven Verzögerungsleitung 11 gelangen. Diese ist vorzugsweise eine Oberflächenschallwellendehneinrichtung (SAW), die an ihren Ausgang ein frequenzmoduliertes Hochfrequenzsignal (CHIRP-Signal) erzeugt. Dieses wird an einen Begrenzerverstärker 13 angelegt, der die Amplitude des Signales begrenzt, und dann an ein Ausgangsgatter 14. Dem Ausgangsgatter 14 ist ein Bandpaßfilter 15 nachgeschaltet, an dessen Ausgang das bandbegrenzte Signale über die Leitung 100 zur weiteren Verarbeitung gelangt (siehe Fig. 2). Das erfindungsgemäße Erzeugen der Lücke A im Radarsendeimpuls erfolgt durch ein Undglied 16, dessen Ausgang mit dem Steuereingang des Ausgangsgatters 14 verbunden ist. Ein erster Eingang des Undgliedes 16 ist mit der Impulsformeinheit 12 verbunden, die über die Leitung 106 einen Torimpuls liefert, der die Länge des Radarsendeimpulses bestimmt. Der zweite Eingang des Undgliedes erhält über die Leitung 104 mindestens einen Austastimpuls, dessen zeitliche Position von der Kodereinrichtung 9 (Fig. 2) festgelegt ist. Durch die "Und" -Verknüpfung des Torimpulses und des Austastimpulses im Undglied 16 wird ein Torimpuls mit einer einzige Lücke erzeugt, der das Ausgangsgatter 14 über eine Leitung 107 ansteuert. Auf diese Weise wird am Ausgang des Ausgangsgatters 14 ein erfindungsgemäßer Radarsendeimpuls mit einer einzige Lücke erzeugt, der über die Leitung 100 nach erfolgter Verstärkung zur Abstrahlung kommt (Fig. 2).

Die erfindungsgemäße Sendeeinrichtung nach Fig. 1 und 2 zur Erzeugung von lückenmodulierten Signalen gewährleistet eine noch ausreichend gute Seitenzipfelunterdrückung. Beträgt die Dauer der in die einzelnen Sendeimpulse eingefügte Lücke beispielsweise 0,1 µs, so beträgt die Seitenzipfelunterdrückung im Empfänger noch mindestens 34 dB. Da dieser Wert nur etwa 6 dB unter dem Wert des unkodierten Radarsendeimpulses liegt, werden die normalen Radarfunktionen davon kaum beeinträchtigt. Dadurch sind keine Einschränkungen bei der Auslegung der Radarparameter erforderlich. Vorhandene Radaranlagen, die mit Pulskompression ausgerüstet sind, können dadurch in besonders einfacher Weise nachgerüstet werden, um lückenkodierte Sendesignale zu erzeugen.

Da die Radarsender im allgemeinen mit hoher Spitzenleistung arbeiten, ist eine hohe Störsicherheit der Datenübertragung durch die im Sendeimpuls eingefügten Lücken gegeben. Auch sind aufgrund der hohen Spitzenleistung der Radarsender einfachste Empfänger in den vom Radarstrahl detektierten Objekten einsetzbar. Eine Empfangseinrichtung in einem Objekt enthält unter anderem eine Dekodiereinrichtung, die die zeitliche Position der Lücke im Radarsendeimpuls zu Telemetriezwecken oder für Lenkzwecke des Objektes selbst (fernsteuern) auswertet.

## Patentansprüche

1. Impulsradarsystem mit einem nach dem Prinzip der Impulskompressionstechnik arbeitenden Sender und Empfänger,
**dadurch gekennzeichnet,** daß in den Sendeimpulsen (I) eine einzige Impulslücke (A) eingefügt ist, deren Dauer (τ) kurz gegenüber der Dauer (T) des Sendeimpulses (I) ist und die als Telemetrieübertragungskanal für im Strahlungsbereich der Antenne des Radarsenders befindliche Objekte und/oder als Identifizierungssignal für an einem Objekt reflektierten Echoimpulse dient.

2. Impulsradarsystem nach Anspruch 1,
**dadurch gekennzeichnet,** daß die Dauer (τ) der Lücke (A) etwa 2 - 3%, insbesondere 2,5%, der Sendeimpulsdauer (T) beträgt.

3. Radarsystem nach einem der vorhergehenden Ansprüche,
**dadurch gekennzeichnet,** daß die Lücke (A) innerhalb des einzelnen Sendeimpulses (I) mehrere, vorzugsweise 32, zeitlich unterschiedliche Positionen einnehmen kann.

4. Impulsradarsystem nach einem der vorhergehenden Ansprüche,
**dadurch gekennzeichnet,** daß die Position der Lücke (A) bei aufeinanderfolgenden Sendeimpulsen (I) im Sinne einer Positionsmodulation geändert wird.

5. Impulsradarsystem nach den Ansprüchen 1 - 3,
**dadurch gekennzeichnet,** daß die Position der Lücke (A) bei aufeinanderfolgenden Sendeimpulsen in für Dritte nicht voraussagbarer Weise verändert wird.

6. Impulsradarsystem nach einem der vorhergehenden Ansprüche,
**dadurch gekennzeichnet,** daß die erste, sowie letzte zeitlich mögliche Lückenposition vom Beginn bzw. Ende des einzelnen Sendeimpulses (I) eine bestimmte Zeitdauer (A,B), die vorzugsweise 6% der Gesamtimpulsdauer (T) beträgt, entfernt ist.

7. Impuls Radarsystem nach einem der vorhergehenden Ansprüche, **dadurch gekennzeichnet,** dass sendeseitig eine Kodiereinrichtung (9) vorgesehen ist, die in Abhängigkeit von den eingangsseitig anliegenden Daten die zeitliche Position der Lücke (A) in Form eines Austastimpulses bestimmt, der einer Expandereinrichtung (1) zugeführt wird.

8. Impuls Radarsystem nach Anspruch 6, **dadurch gekennzeichnet,** dass ein UND-Glied (16) vorgesehen ist, dem über einen ersten Eingang (106) ein der Länge des Sendeimpulses (I) entsprechender Torimpuls und über einen zweiten Eingang (109) der von der Kodiereinrichtung (9) abgegebene Austastimpuls zugeführt werden und dessen Ausgang mit dem Steuereingang eines Ausgangsgatters (14) verbunden ist.

9. Impuls Radarsystem nach einem der vorhergehenden Ansprüche, **dadurch gekennzeichnet,** dass empfangsseitig eine Auswerteschaltung vorgesehen ist, die die zeitliche Position der im Echoimpuls enthaltenen Lücken (A) mit der Lückenposition des abgegebenen Sendeimpulses (I) vergleicht, und dass bei Nichtübereinstimmung beider Lückenpositionen der Echoimpuls unterdrückt wird.

10. Impuls Radarsystem nach einem der vorhergehenden Ansprüche, **dadurch gekennzeichnet,** dass im Empfänger des im Strahlungsbereich der Antenne befindlichen Objekts eine Dekodiereinrichtung vorgesehen ist, die die zeitliche Position der Lücke (A) im Sendeimpuls (I) zu Telemetriezwecken oder für Fernsteueraufgaben auswertet.

11. Impuls Radarsystem nach einem der vorhergehenden Ansprüche, **dadurch gekennzeichnet,** dass die Lücke (A) mit einem Signalteil aufgefüllt ist, der gegenüber dem zeitlich vorausgehenden oder nachfolgenden Teil des Sendeimpulses (I) einen Phasensprung aufweist.

## Claims

1. Pulse radar system having a transmitter and receiver operating according to the principle of pulse compression technology, characterized in that there is inserted into the transmission pulses (I) a single pulse gap (A), the duration (τ) of which is short compared with the duration (T) of the transmission pulse (I) and which serves as telemetry transmission channel for objects located in the radiation range of the aerial of the radar transmitter and/or as identification signal for echo pulses reflected on an object.

2. Pulse radar system according to claim 1, characterized in that the duration (τ) of the gap (A) amounts to approximately 2 - 3%, in particular 2.5%, of the transmission-pulse duration (T).

3. Radar system according to one of the preceding claims, characterized in that the gap (A) within the single transmission pulse (I) can occupy several, preferably 32, temporally different positions.

4. Pulse radar system according to one of the preceding claims, characterized in that the position of the gap (A) with successive transmission pulses (I) is altered in the sense of a position modulation.

5. Pulse radar system according to claims 1 - 3, characterized in that the position of the gap (A) with successive transmission pulses is altered in a manner which cannot be predicted by third parties.

6. Pulse radar system according to one of the preceding claims, characterized in that the first and the last temporally possible gap position is removed from the beginning and end of the single transmission pulse (I) for a certain period of time (A,B), which preferably amounts to 6% of the total pulse duration (T).

7. Pulse radar system according to one of the preceding claims, characterized in that on the transmitting side a coding device (9) is provided which determines in dependence upon the data applied on the input side the temporal position of the gap (A) in the form of a blanking pulse which is supplied to an expander device (1).

8. Pulse radar system according to claim 6, characterized in that an AND-element (16) is provided, to which there are supplied by way of a first input (106) a gate pulse corresponding with the length of the transmission pulse (1) and by way of a second input (109) the blanking pulse emitted by the coding device (9) and the output of which is connected to the control input of an output gate (14).

9. Pulse radar system according to one of the preceding claims, characterized in that on the receiving side an evaluation circuit is provided, which compares the temporal position of the gaps (A) contained in the echo pulse with the gap position of the emitted transmission pulse (I), and in that with incongruity of both gap positions the echo pulse is suppressed.

10. Pulse radar system according to one of the preceding claims, characterized in that in the receiver of the object located in the radiation range of the aerial a decoding device is provided which evaluates the temporal position of the gap (A) in the transmission pulse (I) for telemetry purposes or for remote-control tasks.

11. Pulse radar system according to one of the preceding claims, characterized in that the gap (A) is filled with a signal part which, compared with the temporally preceding or subsequent part of the transmission pulse (I), has a phase shift.

## Revendications

1. Système radar à impulsions comportant un émetteur et un récepteur travaillant selon le principe de la technique de compression des impulsions, caractérisé par le fait que dans les impulsions d'émission (I) est inséré un seul intervalle vide (A), dont la durée (τ) est brève par rapport à la durée (T) de l'impulsion d'émission (I) et qui est utilisé en tant que canal de transmission de télémétrie pour les objets situés dans la zone de rayonnement de l'antenne de l'émetteur radar et/ou en tant que signal d'identification pour des impulsions d'échos réfléchies sur un objet.

2. Système radar à impulsions suivant la revendication 1, caractérisé par le fait que la durée (τ) de l'intervalle vide (A) est égale à 2-3 % et notamment à 2,5 % de la durée (τ) de l'impulsion d'émission.

3. Système radar à impulsions suivant l'une des revendications précédentes, caractérisé par le fait que l'intervalle vide (A) à l'intérieur de l'impulsion d'émission individuelle (I) peut occuper plusieurs positions, de préférence 32 positions différentes dans le temps.

4. Système radar à impulsions suivant l'une des revendications précédentes, caractérisé par le fait que la position de l'intervalle (A) est modifiée dans le sens d'une modulation de position, dans le cas d'impulsions successives d'émission (I).

5. Système radar à impulsions suivant les revendications 1-3, caractérisé par le fait que la position de l'intervalle vide (A) est modifiée d'une manière imprévisible pour des tiers, dans le cas d'impulsions successives d'émission.

6. Système radar à impulsions suivant les revendications précédentes, caractérisé par le fait que la première ainsi que la dernière position d'intervalle vide possibles dans le temps sont séparées du début ou de la fin de l'impulsion individuelle d'émission (I), par une durée déterminée (A,B), qui est égale de préférence à 6 % de la durée totale (T) de l'impulsion.

7. Système radar à impulsions suivant les revendications précédentes, caractérisé par le fait que sur le côté émission il est prévu un dispositif de codage (9), qui, en fonction des données appliquées côté entrée, détermine la position de l'intervalle vide (A) sous la forme d'une impulsion de suppression, qui est envoyée à un dispositif expanseur (1).

8. Système radar à impulsions suivant la revendication 6, caractérisé par le fait qu'il est prévu un circuit ET (16), auquel une impulsion de porte, qui correspond à la durée de l'impulsion d'émission (I), est envoyée par l'intermédiaire d'une première entrée (106) et auquel l'impulsion de suppression, qui est délivrée par le dispositif de codage (9), est envoyée par l'intermédiaire d'une seconde entrée (109), et dont la sortie est raccordée à l'entrée de commande d'une porte de sortie (14).

9. Système radar à impulsions suivant les revendications précédentes, caractérisé par le fait qu'il est prévu, côté réception, un circuit d'évaluation, qu compare la position dans le temps de l'intervalle vide (A) contenu dans l'impulsion d'écho, à la position d'intervalle vide de l'impulsion d'émission délivrée (I) et qu'en cas de non-coïncidence des deux positions des intervalles vides, l'impulsion d'écho est supprimée.

10. Système radar à impulsions suivant les revendications précédentes, caractérisé par le fait que dans le récepteur de l'objet situé dans la zone de rayonnement de l'antenne, il est prévu un dispositif de décodage, qui évalue la position dans le temps de l'intervalle vide (A) dans l'impulsion d'émission (I) à des fins de télémétrie au cours de tâches de télécommande.

11. Système radar à impulsions suivant les revendications précédentes, caractérisé par le fait que l'intervalle vide (A) est rempli par une partie de signal, qui comporte un saut de phase par rapport à la partie précédente ou suivante dans le temps de l'impulsion d'émission (I).
